# FASCICULE DE BREVET EUROPEEN

(11) **EP 2 715 892 B1**
(45) Date de publication et mention de la délivrance du brevet: **26.07.2017**
(21) Numéro de dépôt: 12725475.3
(22) Date de dépôt: 27.04.2012
(51) Int. Cl.: H02B 13/055

(54) **APPAREILLAGE ELECTRIQUE A ISOLATION GAZEUSE AYANT UN COMPOSÉ FLUORÉ**
GASISOLIERTE SCHALTANLAGE MIT FLUORINIERTER VERBINDUNG
GAS INSULATED SWITCHGEAR HAVING A FLUORINE COMPOUND

(30) Priorité: 24.05.2011 FR 1154509
(43) Date de publication de la demande: 09.04.2014
(73) Titulaire: Schneider Electric Industries SAS, 92500 Rueil-Malmaison (FR)
(72) Inventeur: PICCOZ, Daniel, F-69480 Lucenay (FR); MALADEN, Romain, F-71000 Macon (FR)
(74) Mandataire: Colette, Marie-Françoise
(86) Numéro de dépôt international: PCT/FR2012/000167
(87) Numéro de publication internationale: WO 2012/160266

(56) Documents cités:
- WO-A1-2010/142346
- WO-A1-2010/142353

## Description

### DOMAINE TECHNIQUE

L'invention concerne un appareillage électrique à isolation gazeuse pour une ligne de transport de courant à moyenne ou haute tension, qui comporte des moyens de régulation de la quantité de gaz isolant en suspension dans le volume intérieur de l'enveloppe isolante.

### ÉTAT DE LA TECHNIQUE ANTÉRIEURE

Dans un appareil électrique de moyenne ou haute tension, les fonctions d'isolation électrique et d'extinction d'arc électrique sont typiquement assurées par un gaz isolant qui est confiné à l'intérieur de l'appareil. Dans leur acceptation habituelle, le terme « moyenne tension » désigne une tension qui est supérieure à 1 000 volts en courant alternatif et strictement supérieure à 1 500 volts en courant continu mais qui ne dépasse pas 52 000 volts en courant alternatif et 75 000 volts en courant continu, tandis que le terme « haute tension » désigne une tension qui est strictement supérieure à 52 000 volts en courant alternatif et à 75 000 volts en courant continu.

Selon un mode de réalisation connu, le gaz isolant utilisé à l'intérieur de ces appareils contient de l'hexafluorure de soufre SF₆. Bien qu'offrant de très bonnes propriétés notamment diélectriques et chimiques, l'hexafluorure de soufre présente une certaine nocivité du point de vue de l'environnement ; en particulier son PRG (« Potentiel de Réchauffement Global », connu aussi sous l'acronyme GWP pour « *Global Warming Potential* ») est très élevé.

En remplacement de l'hexafluorure de soufre, il a été proposé d'utiliser des fluorocétones tel que décrit par exemple dans le document WO 2010/142346. Les fluorocétones ont une bonne rigidité diélectrique et de meilleures caractéristiques environnementales que l'hexafluorure de soufre. D'autres gaz fluorés utilisés seuls ou en mélange ont également été envisagés, du fait de leur rigidité diélectrique et au vu de leurs caractéristiques environnementales, notamment les hydrofluorooléfines (demande non publiée FR 11 56062), les hydrofluorocarbones, les fluoro-oxiranes (demande non publiée FR 11 60971), ainsi que les hydrochlorooléfines ou les hydrofluoroéthers.

Cependant, la température d'ébullition de ces composés fluorés est relativement élevée, d'autant plus que leur molécule, notamment celle de fluorocétone, est grande. Or, certains appareillages électriques sont destinés à être montés en extérieur, où la température peut descendre à des températures négatives, jusqu'à -40°C. Sous de telles températures négatives, il n'est possible de maintenir la pression de gaz fluorés, notamment de fluorocétone, sous forme gazeuse qu'à une valeur limitée, ce qui réduit leur efficacité : de fait, à de telles températures, la fluorocétone par exemple se condense, formant un liquide au fond de l'enveloppe.

Le document WO 2010/142346 décrit un appareillage électrique comportant des moyens de régulation de la pression de gaz de fluorocétone. Ces moyens de régulation comportent des moyens d'injection de gaz de fluorocétone, et des moyens de chauffage d'au moins une partie de l'enveloppe externe de l'appareillage ; le chauffage partiel de l'enveloppe permet de chauffer le gaz de fluorocétone et de limiter la condensation de celui-ci.

Cependant, lorsque la température ambiante extérieure à l'enveloppe est relativement froide, une grande partie de la chaleur produite pour réchauffer l'enveloppe est alors échangée avec l'extérieur, ce qui se traduit par des déperditions thermiques importantes. Ainsi, un tel système consomme beaucoup d'énergie pour réchauffer l'enveloppe et le gaz d'isolation à base de fluorocétone.

### EXPOSÉ DE L'INVENTION

L'invention a pour but de proposer un appareillage électrique, comme défini par la revendication 1, comportant des moyens de régulation de la pression de gaz de gaz fluoré limitant les déperditions de la chaleur produite.

L'invention propose un appareillage électrique à isolation gazeuse à moyenne et/ou haute tension, comportant une enveloppe fermée de manière étanche aux gaz dont le volume intérieur est rempli par un gaz isolant électriquement comportant au moins un composé fluoré dont le PRG est inférieur à 3500, notamment une fluorocétone, une hydrofluorooléfine, un hydrofluorocarbone et/ou un fluoro-oxirane, voire une hydrochlorooléfine ou un hydrofluoroéther. Au moins un composant électrique est agencé dans le volume intérieur de l'enveloppe, qui est réalisée de manière telle qu'un liquide formé par condensation à l'intérieur de l'enveloppe, et notamment à partir du composé fluoré, est collecté dans un réservoir dont le volume intérieur communique avec le volume intérieur de l'enveloppe. L'appareillage électrique comprend également des moyens de régulation de la quantité de composé fluoré dans le volume intérieur de l'enveloppe qui comportent des moyens de chauffage d'un liquide résultant de la condensation de composé fluoré présente dans le gaz isolant, lesdits moyens de chauffage du liquide étant agencés au moins en partie dans le réservoir. Le chauffage du liquide formé par condensation provoque sa vaporisation et ainsi augmente la pression de gaz dans l'enveloppe. Les déperditions de la chaleur produite par les moyens de chauffage sont alors limitées, ce qui améliore l'efficacité des moyens de régulation de la pression de gaz d'isolation.

De préférence, le liquide de condensation s'écoule par gravité vers le réservoir. Notamment, les moyens de chauffage peuvent comporter une résistance permettant de réchauffer l'intérieur du réservoir ; alternativement, les moyens de chauffage comportent un solénoïde et un noyau, de préférence ferromagnétique, permettant de réchauffer l'intérieur du réservoir.

Dans un autre mode de réalisation, les moyens de chauffage comportent un composant conducteur thermique qui traverse la paroi du réservoir, une partie du conducteur thermique étant située à l'extérieur du réservoir et une autre partie du conducteur thermique reçue à l'intérieur du réservoir. De préférence, ledit conducteur thermique consiste en un tube permettant le remplissage du volume intérieur de l'enveloppe en gaz d'isolation.. Le conducteur thermique est associé à des moyens permettant de modifier sa température, notamment une résistance, respectivement un solénoïde et son noyau associé, agencée à l'extérieur du réservoir et de l'enveloppe, et qui est apte à chauffer ladite partie du conducteur thermique qui est située à l'extérieur du réservoir ; une partie du conducteur thermique, ou du tube, peut être à l'intérieur des moyens de modification de sa température, notamment à l'intérieur du solénoïde le cas échéant.

Dans un autre mode de réalisation, les moyens de chauffage pourraient être agencés dans une cavité ouverte vers l'extérieur qui fait saillie vers le haut par rapport à une paroi inférieure de fond du réservoir. De préférence, le volume intérieur de la cavité est alors rempli par un fluide caloporteur qui est apte à conduire la chaleur produite par une résistance vers la paroi de la cavité.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un appareillage électrique comportant des moyens de régulation selon l'invention ;
- la figure 3 est une section suivant un plan longitudinal vertical du fond de l'enveloppe de la figure 1 ;
- les figures 3A, 3B et 3C sont des détails à plus grande échelle du réservoir représenté en section à la figure 2, montrant trois modes de réalisation des moyens de chauffage ;
- la figure 4 est une représentation schématique en perspective d'un autre mode de réalisation de l'enveloppe ;
- la figure 5 est une section du réservoir représenté à la figure 4, montrant un autre mode de réalisation des moyens de chauffage.

### EXPOSÉ DÉTAILLÉ DE MODES DE RÉALISATION PARTICULIERS

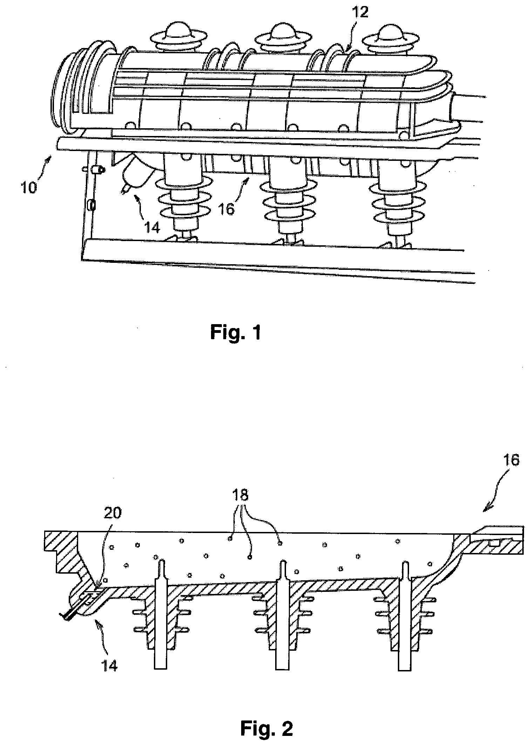

L'appareillage électrique représenté à la figure 1 est un interrupteur-sectionneur, permettant la mise sous tension ou la mise hors tension d'une ligne de transport de courant à moyenne et/ou haute tension ; d'autres types d'appareillage et/ou géométries pour les interrupteurs sectionneurs peuvent bien entendu être considérés pour l'invention.

L'appareillage 10 comporte en particulier une enveloppe extérieure 12 d'axe principal longitudinal délimitant un volume creux dans lequel un composant électrique (non représenté) est agencé. Le volume intérieur de l'enveloppe 10 est fermé de manière étanche aux gaz et est rempli par un gaz d'isolation électrique dont le PRG est de préférence inférieur à 85 %, ou 95 %, voire 99 % de celui du SF₆. En particulier, le gaz d'isolation diélectrique comprend un composé fluoré dont le PRG est inférieur à 3500, seul ou en mélange, choisi afin d'avoir les meilleures qualités d'isolation, tout en ayant une pression de vapeur saturante suffisamment élevée. Dans le mode de réalisation détaillé, l'enveloppe est remplie par un gaz comprenant au moins une fluorocétone, mais alternativement, il pourrait s'agir d'une hydrofluorooléfine comme HFO 1234 zeE et HFO 1234 yf, voire HFO 1336 mzzzM, d'un hydrofluorocarbone comme HfC R-125 ou HFC R-236cb, et/ou d'un fluoro-oxirane comme C₄F₈O, ainsi que de hydrochlorooléfine comme HCFO trans 1233zd ou de hydrofluoroéthers comme HFE 245fa.

La performance d'un gaz isolant comme une fluorocétone est d'autant plus importante que sa molécule est grosse, c'est-à-dire qu'elle comporte un grand nombre d'atomes de carbone et de fluor, et que la molécule est ramifiée. Par contre, plus la molécule de fluorocétone est grosse, plus sa température d'ébullition est élevée, c'est-à-dire que sa pression de vapeur saturante à une température donnée est faible. Par exemple, la température d'ébullition pour la molécule C₅F₁₀O est d'environ 22°C, la température d'ébullition pour la molécule de C₆F₁₂O est d'environ 49°C et la température d'ébullition pour la molécule C₇F₁₈O est d'environ 73°C. Par conséquent, à une température donnée, le gaz d'isolation peut contenir une plus grande quantité d'un fluorocétone ayant une petite molécule qu'un fluorocétone ayant une molécule plus grosse, mais la capacité d'extinction d'arc de cette molécule plus petite est inférieure.

Lorsque l'appareillage 10 est utilisé en extérieur, une température ambiante relativement basse a pour conséquence qu'une partie du produit fluoré présente dans le gaz d'isolation se condense, réduisant alors sa pression partielle dans le gaz d'isolation et réduisant alors l'efficacité de l'isolation gazeuse. Pour maintenir la pression partielle du composé fluoré utilisé à un niveau suffisant, l'appareillage 10 comporte donc des moyens de régulation de la pression de gaz d'isolation à l'intérieur de l'enveloppe 12, et en particulier des moyens de chauffage pour compenser la condensation de fluorocétone et la maintenir sous forme gazeuse.

Selon l'invention, les moyens de régulation comportent des moyens pour récupérer en un même endroit le liquide résultant de la condensation du gaz d'isolation et le rassembler dans un réservoir 14. Dans la description qui va suivre, on utilisera le terme "condensat" pour définir le liquide résultant de la condensation du gaz d'isolation.

Selon le mode de réalisation préféré de l'invention, l'enveloppe 12 de l'appareillage 10 est réalisée de manière telle que le condensat s'écoule par gravité terrestre, et est récupéré par un réservoir 14 vers lequel le condensat est amené à s'écouler. En particulier, dans le mode de réalisation des figures 1 et 2, le fond 16 de l'enveloppe 12 est concave et ouvert vers le haut ; la surface intérieure du fond 16 est arrondie et le fond 16 est incliné par rapport à l'horizontale, de manière telle que le condensat 18 qui s'est écoulé vers le fond s'écoule aussi vers une extrémité longitudinale du fond 16 de l'enveloppe 12. Par conséquent, l'ensemble des gouttelettes de condensat 18 convergent par gravité vers une portion inférieure d'extrémité longitudinale du fond 16 de l'enveloppe.

Le réservoir 14 selon l'invention est agencé au niveau de cette extrémité longitudinale du fond 16 pour que le condensat 20 ainsi rassemblé s'écoule dans le réservoir 14. Ainsi, le réservoir 14 est situé à une position verticale inférieure que le plus bas point du fond 16 de l'enveloppe 12 et le réservoir 14 est ouvert vers le haut. Le réservoir 14 est réalisé de manière que son volume intérieur communique directement avec le volume intérieur de l'enveloppe 12.

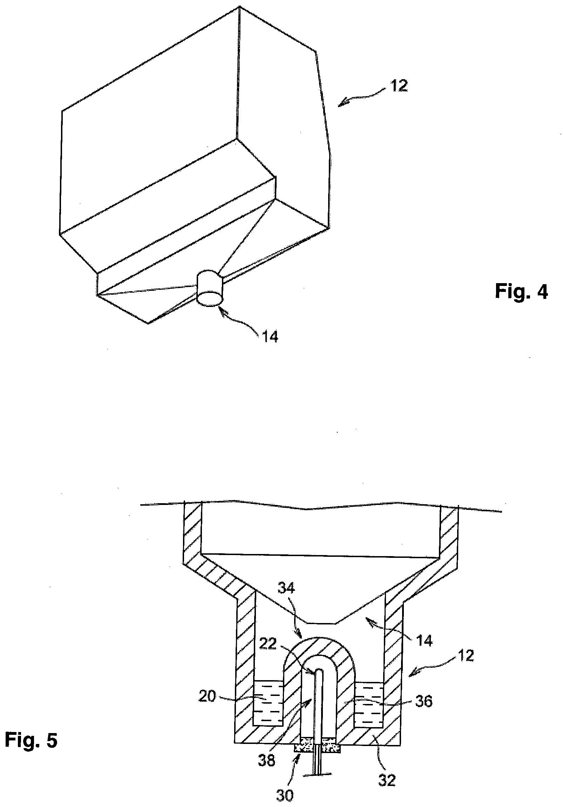

En figure 4 est représenté un autre mode de réalisation de l'enveloppe 12 dans lequel toutes les parois sont globalement planes et sont inclinées vers le bas. Le réservoir 14 est alors situé à l'extrémité verticale inférieure de l'enveloppe 12 et centré horizontalement par rapport à l'enveloppe 12. Ainsi, les parois de l'enveloppe 12 sont toutes orientées en direction du réservoir 14 de manière que les gouttelettes 18 de fluorocétone condensé s'écoulent jusqu'au réservoir 14. D'autres alternatives sont possibles.

L'enveloppe 12, celle-ci est réalisée en un matériau isolant thermiquement, ce qui permet de limiter les effets des conditions climatiques externes (figure 1). Alternativement, pour réduire le coût total de l'appareillage 10, l'enveloppe 12 peut être réalisée en un matériau conducteur thermique, par exemple en métal (figure 4).

L'appareillage électrique 10 comporte aussi des moyens de régulation de la pression de gaz d'isolation dans le volume intérieur de l'enveloppe 12. Ces moyens de régulation comportent des moyens de mesure (non représentés) de la quantité de fluorocétone présente dans le volume intérieur de l'enveloppe 12, qui consistent par exemple en au moins un capteur de pression, des moyens de mesure de densité de fluorocétone ou des moyens de mesure de la température du gaz d'isolation.

Les moyens de régulation comportent aussi des moyens de chauffage permettant de provoquer une vaporisation de fluorocétone dans le volume intérieur de l'enveloppe 12. Ces moyens de chauffage sont commandés en fonction de la quantité de fluorocétone mesurée par les moyens de mesure définis ci-dessus. Les moyens de chauffage sont réalisés de manière à ne réchauffer que le condensat 20 qui est récupéré dans le réservoir 14. Ainsi, les moyens de chauffage provoquent une vaporisation du condensat 20 collecté dans le réservoir 14, produisant alors une augmentation de la quantité de fluorocétone sous forme gazeuse présente dans le gaz d'isolation.

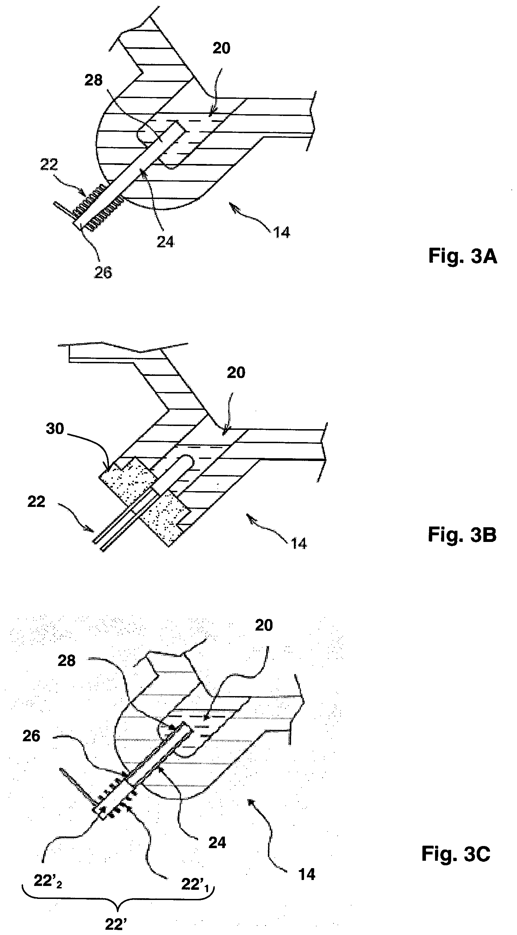

Dans un premier mode de réalisation illustré en figure 3A, les moyens de chauffage comportent une résistance 22, par exemple une résistance électrique, qui produit de la chaleur qui est transmise au condensat ; la chaleur produite par la résistance 22 est transmise au condensat par l'intermédiaire d'un conducteur thermique 24. Cette transmission de chaleur est particulièrement avantageuse dans le cas pour lequel l'enveloppe 12 est réalisée en matériau isolant thermiquement car seul le conducteur thermique 24 permet à la chaleur produite par la résistance 22 d'atteindre le condensat 20. Il sera néanmoins compris que le conducteur thermique 24 peut aussi être utilisé pour le mode de réalisation selon lequel l'enveloppe 12 est réalisée en matériau conducteur thermique.

La résistance 22 est ainsi agencée à l'extérieur du réservoir 14, de préférence, à l'extérieur de l'enveloppe 12, et le conducteur thermique 24 traverse la paroi du réservoir 14. Une première extrémité 26 du conducteur thermique est située à l'extérieur de l'enveloppe 12 et est chauffée par la résistance, et une deuxième extrémité 28 du conducteur thermique 24 est située à l'intérieur du réservoir 14 et réchauffe le condensat 20 : la chaleur produite par la résistance est transmise au condensat 20 par l'intermédiaire du conducteur thermique 24.

Le conducteur de chaleur 24 peut être un tube utilisé pour le remplissage du volume intérieur de l'enveloppe 12 en gaz isolant. Cela permet de réaliser un seul orifice dans l'enveloppe 12 afin d'assurer deux fonctions, réduisant alors les risques de fuite gazeuse ainsi que le coût total de l'appareillage 10.

Selon une variante illustrée en figure 3B, la résistance 22 est reçue directement dans le réservoir 14. On peut noter également que le réservoir 14 consiste en un élément cylindrique dont l'extrémité axiale inférieure est fermée de manière étanche aux gaz par un bouchon 30 qui porte la résistance.

Selon un second mode de réalisation représenté à la figure 3C, les moyens de chauffage 22' comprennent un solénoïde 22'₁ et son noyau 22'₂. La chaleur produite est transmise au condensat 20, de préférence par l'intermédiaire d'un conducteur thermique 24 qui peut également être un tube de remplissage : le solénoïde 22'₁ et son noyau 22'₂ sont ainsi agencés à l'extérieur du réservoir 14, à l'extérieur de l'enveloppe 12, et le conducteur thermique 24 traverse la paroi du réservoir 14, une première extrémité 26 du conducteur thermique 24 étant située à l'extérieur de l'enveloppe 12 et chauffée par les moyens 22', et la seconde extrémité 28 située à l'intérieur du réservoir 14 réchauffant le condensat 20. Ainsi, la chaleur produite par le solénoïde et son noyau est transmise au condensat 20 par l'intermédiaire du conducteur thermique 24.

Dans un autre mode de réalisation illustré en figure 5, le réservoir 14 de condensat comporte une paroi inférieure de fond 32 dans laquelle une cavité 34 est réalisée. La cavité 34 fait saillie verticalement vers le haut par rapport à la paroi de fond 32 : elle s'étend donc à l'intérieur du réservoir 14. La cavité 34 est ouverte vers le bas et elle est réalisée de manière telle que son volume intérieur ne communique pas avec le volume intérieur du réservoir 14. Une résistance 22 de chauffage du condensat 20 est agencée à l'intérieur de la cavité 34, à distance des parois 36 de la cavité 34. Un bouchon 30 obture de manière étanche l'ouverture inférieure de la cavité 34, et porte la résistance 22. L'espace séparant la résistance 22 des parois de la cavité 34 est rempli par un liquide caloporteur 38 qui transmet la chaleur produite par la résistance 22 aux parois 36 de la cavité.

Ce mode de réalisation est particulièrement adapté pour une enveloppe 12 dont les parois sont réalisées en un matériau conducteur thermique. Ainsi, les parois du réservoir 14 et les parois de la cavité 34 sont elles aussi réalisées en matériau conducteur thermique pour conduire la chaleur, qui est produite par la résistance 22, provenant du fluide caloporteur 38 vers le condensat de fluorocétone 20. La chaleur ainsi transmise vers le condensat de fluorocétone 20 se vaporise alors, pour augmenter la pression de gaz d'isolation.

A titre de variante de réalisation, les moyens de chauffage du condensat 20 consistent en des moyens utilisant le champ magnétique et/ou électrique interne à l'appareillage électrique 10, ce qui permet de n'avoir aucune source d'énergie externe, l'appareillage 10 est alors autonome en ce qui concerne le chauffage du condensat 20. On pourrait aussi prévoir des caloducs ou des évaporateurs capillaires.

L'appareillage électrique selon l'invention est particulièrement avantageux du fait qu'une proportion réduite du volume intérieur de l'enveloppe 12 est réchauffée par les moyens de chauffage. Ces moyens de chauffage consomment donc une faible quantité d'énergie.

## Revendications

1. Appareillage électrique (10) à isolation gazeuse à moyenne et/ou haute tension comportant :
- une enveloppe (12) fermée de manière étanche aux gaz dont le volume intérieur est rempli par un gaz isolant électriquement comportant au moins un composé fluoré dont le potentiel de réchauffement global PRG est inférieur à 3500 ;
- au moins un composant électrique agencé dans le volume intérieur de l'enveloppe (12) ;
- des moyens de régulation de la quantité de composé fluoré dans le volume intérieur de l'enveloppe (12) ;
- un réservoir (14) dont le volume intérieur communique avec le volume intérieur de l'enveloppe (12), l'enveloppe (12) étant réalisée de manière telle qu'un liquide (20) formé par condensation soit collecté dans le réservoir (14),
**caractérisé en ce que** les moyens de régulation comportent des moyens de chauffage (22, 22', 24, 38) d'un liquide (20) résultant de la condensation du composé fluoré présent dans le gaz isolant, pour provoquer la vaporisation d'au moins une partie dudit liquide (20), lesdits moyens de chauffage (22, 22', 24, 38) du liquide (20) étant agencés au moins en partie dans le réservoir (14).

2. Appareillage électrique (10) selon la revendication 1 dans lequel les moyens de chauffage comportent une résistance (22) permettant de réchauffer l'intérieur du réservoir (14).

3. Appareillage électrique (10) selon la revendication 1 dans lequel les moyens de chauffage (22') comprennent un solénoïde (22'₁) et son noyau (22'₂) permettant de réchauffer l'intérieur du réservoir (14).

4. Appareillage électrique (10) selon la revendication 1, dans lequel les moyens de chauffage comportent un composant conducteur thermique (24) qui traverse la paroi du réservoir (14), une partie (26) du conducteur thermique (24) étant située à l'extérieur du réservoir (14) et une autre partie (28) du conducteur thermique (24) étant reçue à l'intérieur du réservoir (14).

5. Appareillage électrique (10) selon la revendication 4, dans lequel les moyens de chauffage comportent une résistance (22) agencée à l'extérieur du réservoir (14) et à l'extérieur de l'enveloppe (12), apte à chauffer ladite partie (26) du conducteur thermique (24) qui est située à l'extérieur du réservoir (14).

6. Appareillage électrique (10) selon la revendication 4, dans lequel les moyens de chauffage comportent un ensemble solénoïde-noyau (22') agencé à l'extérieur du réservoir (14) et à l'extérieur de l'enveloppe (12), apte à chauffer ladite partie (26) du conducteur thermique (24) qui est située à l'extérieur du réservoir (14).

7. Appareillage électrique (10) selon l'une quelconque des revendications 4 à 6, dans lequel ledit conducteur thermique (24) consiste en un tube permettant le remplissage du volume intérieur de l'enveloppe (12) en gaz d'isolation.

8. Appareillage électrique selon l'une des revendications 1 à 7 dans lequel le composé fluoré est choisi parmi les fluorocétone, hydrofluorooléfine, fluorooxirane, hydrofluorocarbone, ou un mélange de ces composés.

9. Appareillage électrique (10) selon l'une des revendications 1 à 8 dans lequel l'enveloppe (12) est formée de manière telle que ledit liquide (20) s'écoule par gravité vers le réservoir (14).

## Patentansprüche

1. Gasisolierte Mittel- und/oder Hochspannungs-Schaltanlage (10), umfassend:
- eine dicht gegen Gase verschlossene Hülle (12), deren Innenvolumen mit einem elektrisch isolierenden Gas gefüllt ist, umfassend mindestens eine Fluorverbindung, deren globales Erwärmungspotential PRG niedriger als 3500 ist;
- mindestens eine elektrische Komponente, die in dem Innenvolumen der Hülle (12) angeordnet ist;
- Mittel zur Regulierung der Menge an Fluorverbindung in dem Innenvolumen der Hülle (12);
- einen Behälter (14), dessen Innenvolumen mit dem Innenvolumen der Hülle (12) in Verbindung steht, wobei die Hülle (12) derart ausgeführt ist, dass eine durch Kondensation gebildete Flüssigkeit (20) in dem Behälter (14) gesammelt wird,
**dadurch gekennzeichnet, dass** die Regulierungsmittel Mittel (22, 22', 24, 38) zur Erwärmung einer Flüssigkeit (20), die aus der Kondensation der in dem Isoliergas vorhandenen Fluorverbindung stammt, umfassen, um die Verdampfung mindestens eines Teils der Flüssigkeit (20) hervorzurufen, wobei die Mittel (22, 22', 24, 38) zur Erwärmung der Flüssigkeit (20) zumindest teilweise in dem Behälter (14) angeordnet sind.

2. Schaltanlage (10) nach Anspruch 1, bei der die Erwärmungsmittel einen Widerstand (22) umfassen, der es ermöglicht, das Innere des Behälters (14) zu erwärmen.

3. Schaltanlage (10) nach Anspruch 1, bei der die Erwärmungsmittel (22') ein Solenoid (22'₁) umfassen, und es sein Kern (22'₂) ermöglicht, das Innere des Behälters (14) zu erwärmen.

4. Schaltanlage (10) nach Anspruch 1, bei der die Erwärmungsmittel eine Wärme leitende Komponente (24) umfassen, die durch die Wand des Behälters (14) hindurchgeht, wobei ein Teil (26) des Wärmeleiters (24) außerhalb des Behälters (14) angeordnet ist, und ein anderer Teil (28) des Wärmeleiters (24) im Inneren des Behälters (14) aufgenommen ist.

5. Schaltanlage (10) nach Anspruch 4, bei der die Erwärmungsmittel einen Widerstand (22) umfassen, der außerhalb des Behälters (14) und außerhalb der Hülle (12) angeordnet und geeignet ist, den Teil (26) des Wärmeleiters (24) zu erwärmen, der sich außerhalb des Behälters (14) befindet.

6. Schaltanlage (10) nach Anspruch 4, bei der die Erwärmungsmittel eine Solenoid-Kern-Einheit (22') umfassen, die außerhalb des Behälters (14) und außerhalb der Hülle (12) angeordnet und geeignet ist, den Teil (26) des Wärmeleiters (24) zu erwärmen, der sich außerhalb des Behälters (14) befindet.

7. Schaltanlage (10) nach einem der Ansprüche 4 bis 6, bei der der Wärmeleiter (24) in einem Rohr besteht, das die Füllung des Innenvolumens der Hülle (12) mit Isoliergas ermöglicht.

8. Schaltanlage nach einem der Ansprüche 1 bis 7, bei der die Fluorverbindung unter Fluorketon, Hydrofluorolefin, Fluoroxiran, Hydrofluorcarbon oder einer Mischung dieser Komponenten ausgewählt ist.

9. Schaltanlage (10) nach einem der Ansprüche 1 bis 8, bei der die Hülle (12) derart ausgebildet ist, dass die Flüssigkeit (20) durch Schwerkraft in den Behälter (14) abfließt.

## Claims

1. Electrical apparatus (10) having a gas insulation for medium- and/or high-voltages containing:
- a gas-tight housing (12) the inner space of which is filled with an electrically insulating gas containing at least one fluorinated compound with a global warming potential GWP below 3500;
- at least one electrical component arranged in the inner space of the housing (12);
- means for regulating the quantity of fluorinated compound in the inner space of the housing (12);
- tank (14) the inner space of which communicates with the inner space of the housing (12), the housing (12) being made in such a way that a liquid (20) formed by condensation is collected in the tank (14),
**characterized in that** the regulating means contain means (22,22',24,38) for heating a liquid (20) resulting from the condensation of the fluorinated compound present in the insulating gas, in order to cause the vaporization of at least part of said liquid (20), the means (22,22',24,38) for heating the liquid (20) being arranged at least partly in the tank (14).

2. Electrical apparatus (10) according to Claim 1, in which the heating means contain a resistor (22) making it possible to heat the inside of the tank (14).

3. Electrical apparatus (10) according to Claim 1, in which the heating means (22') comprise a solenoid (22'₁) and its core (22'₂) making it possible to heat the inside of the tank (14).

4. Electrical apparatus (10) according to Claim 1, in which the heating means contain a heat conductor component (24) that passes through the wall of the tank (14), part (26) of the heat conductor (24) being located outside the tank (14) and another part (28) of the heat conductor (24) being received inside the tank (14).

5. Electrical apparatus (10) according to Claim 4, in which the heating means contain a resistor (22), arranged outside the tank (14) and outside the housing (12), capable of heating said part (26) of the heat conductor (24) which is located outside

6. Electrical apparatus (10) according to Claim 4, in which the heating means contain a solenoid/core assembly (22'), arranged outside the tank (14) and outside the housing (12), capable of heating said part (26) of the heat conductor (24) which is located outside the tank (14).

7. Electrical apparatus (10) according to any of Claims 4 to 6, in which said heat conductor (24) consists of a tube allowing the inner space of the housing (12) to be filled with insulating gas.

8. Electrical apparatus according to one of Claims 1 to 7, in which the fluorinated compound is chosen from the fluoroketones, hydrofluoroolefins, fluorooxiranes, hydrofluorocarbons, or a mix of these compounds.

9. Electrical apparatus (10) according to one of Claims 1 to 8, in which the housing (12) is formed in such a way that said liquid (20) flows under gravity toward the tank (14).
